(19) Europäisches Patentamt
European Patent Office
Office européen des brevets

(11) **EP 1 740 928 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
**G01N 21/27** (2006.01) **G01N 21/47** (2006.01)
**G01J 3/02** (2006.01)

(21) Anmeldenummer: **05736944.9**

(22) Anmeldetag: **26.04.2005**

(86) Internationale Anmeldenummer:
**PCT/EP2005/004433**

(87) Internationale Veröffentlichungsnummer:
**WO 2005/106431 (10.11.2005 Gazette 2005/45)**

(54) **VERFAHREN ZUR REKALIBRIERUNG EINES SPEKTROMETRISCHEN MESSKOPFES**

METHOD FOR RECALIBRATING A SPECTROMETRIC MEASURING PROBE

PROCEDE DE RECALIBRAGE D'UNE TETE DE MESURE SPECTROMETRIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.04.2004 DE 102004021448**
**30.09.2004 DE 102004048102**

(43) Veröffentlichungstag der Anmeldung:
**10.01.2007 Patentblatt 2007/02**

(73) Patentinhaber: **Carl Zeiss Spectroscopy GmbH**
**07745 Jena (DE)**

(72) Erfinder:
• **SCHEBESTA, Wilhelm**
**07749 Jena (DE)**
• **HOYME, Werner**
**99510 Gebstedt (DE)**
• **RODE, Michael**
**07743 Jena (DE)**
• **CORRENS, Nico**
**99425 Weimar (DE)**
• **GÖTZ, Martin**
**07747 Jena (DE)**

(74) Vertreter: **Müller, Silke**
**Carl Zeiss AG**
**Patentabteilung**
**Carl-Zeiss-Promenade 10**
**07745 Jena (DE)**

(56) Entgegenhaltungen:
**EP-A- 0 296 259 WO-A-00/04373**
**US-A- 4 029 419**

EP 1 740 928 B1

**Beschreibung**

Die vorliegende Erfindung betrifft ein Verfahren zur internen Rekalibrierung eines spektrometrischen Messkopfes.

Nach dem bekannten Stand der Technik sind zahlreiche Lösungen bekannt, die zur Prozessüberwachung spektrometrische Anordnungen verwenden. Während entsprechende Messungen unter Laborbedingungen durch die Einhaltung der standardisierten Bedingungen kein Problem darstellen, werden an die Messaufgaben in der Prozessüberwachung besondere Anforderungen gestellt.

Messköpfe für die Messung diffuser Reflexion benötigen als Maßverkörperung für die Kalibrierung die zwei Standards Schwarz und Weiß. Mit diesen wird die Messskala zu Messbeginn kalibriert. Die folgenden zu messenden Proben (Messgut) ordnen sich zwischen den beiden Grenzwerten ein. Auftretende Veränderungen der Messbedingungen können dabei zu fehlerhaften Messergebnissen führen.

Solche Veränderungen können beispielsweise durch altersbedingte Ablagerung an der Lichtquelle resultieren, wodurch sich die Intensität und Farbtemperatur des Lichtes ändern können. Weiterhin sind auch thermische Einflüsse auf das Detektionssystem denkbar, die zu Schwankungen in der Empfindlichkeit und dem Dunkelsignal führen können und so die Messergebnisse verfälschen. Um dies zu verhindern sind in regelmäßigen Zeitabschnitten Rekalibrierungen mit den genannten beiden Standards erforderlich.

In der Regel muss dazu die Messprobe aus der Probenebene entfernt und durch die 2 Kalibrierstandards ersetzt werden. In der Prozessmesstechnik ist dieser Vorgang nicht nur störend und zeitaufwendig, sondern unter Umständen gar nicht realisierbar. Eine andere Möglichkeit ist das exakte Positionieren des Messkopfes über den Kalibrierproben an einem anderen als den Probenmessort.

In der US 5,982,501 A wird ein Gerät zum Messen des Reflexionsvermögens einer Probe beschrieben, dessen Messwerte vorzugsweise zu einem Spektrometer weiter geleitet werden. Das Messgerät besteht dabei aus einem Gehäuse, in dem ein Messkopf zum Messen des vom Objekt reflektierten Lichtes, ein opto-elektrischer Konverter zum Umwandeln des gemessenen Lichtes in elektrische Signale, eine Computereinheit zur Verarbeitung der elektrischen Signale und zum Steuern der Vorrichtung, eine Anzeigeeinheit zur Darstellung der Messwerte und eine Bedieneinheit angeordnet sind. Bei Auslösen des Messprozesses wird der Messkopf durch einen Motor aus seiner Ruhestellung im Gehäuse in die Messposition außerhalb des Gehäuses verschoben und die Messung durchgeführt. Danach fährt der Messkopf wieder in die Ruheposition in das Gehäuse. Innerhalb des Gehäuses sind weiterhin Referenzmuster angeordnet, anhand derer der Messkopf kalibriert werden kann. Dazu wird der Messkopf über dem jeweiligen Referenzmuster positioniert und die entsprechende Messung ausgelöst. Anhand der in der Computereinheit gespeicherten Bezugswerte ist eine Kalibrierung möglich. Als Referenzmuster können neben einem Weiß-Standard weitere Farbnormen zur Überprüfung der spektralen Kalibrierung zum Einsatz kommen. Weiterhin verfügt die Anordnung über ein Filterrad, welches gemeinsam mit dem Messkopf verschoben werden kann, um entweder das Licht der Messlichtquelle oder das vom Objekt reflektierte Licht spektral zu beeinflussen. Dazu werden die Filter des Filterrades in den betreffenden Strahlengang positioniert. Nachteilig bei dieser Lösung ist, dass die Kalibrierung im Gehäuse und nicht direkt am Messort erfolgt. Durch die entsprechend unterschiedlichen Bedingungen lassen sich die Ergebnisse der Kalibrierungen aus dem Gehäuseinneren nur schwer auf den äußeren Messort übertragen. Außerdem ist hier der gesamte Messkopf auf die Kalibrierstandards und die Messprobe jeweils exakt motorisch zu positionieren.

Aus WO 00/04373 A1 ist eine Vorrichtung zur Messung optischer Eigenschaften eines sich bewegenden Gewebes bekannt, deren Messkopf interne, in den Strahlengang schwenkbare Standards aufweist und so eine Rekalibrierung ohne externe Standards erlaubt. Jedoch müssen die Beleuchtungsquelle und die Spektrometeranordnung zur Rekalibrierung verfahren werden, so dass die Messung nur eine begrenzte Genauigkeit aufweist, insbesondere bei zeitlichen Schwankungen des Dunkelsignals, der Lampenintensität und der Empfängerempfindlichkeit.

Aus EP 0 296 259 A1 ist ein spektrometrischer Messkopf mit einschwenkbaren internen Standards zur Rekalibrierung bekannt. Auch dieser Messkopf ermöglicht nur eine Messung mit begrenzter Genauigkeit, insbesondere bei zeitlichen Schwankungen des Dunkelsignals, der Lampenintensität und der Empfängerempfindlichkeit.

Ein Verfahren und eine entsprechende Anordnung zur automatischen Kalibrierung eines Farberkennungssystems wird in der EP 0 010 940 A1 beschrieben. Die Lösung dient dazu, die Farbe eines Produktes zu überwachen und/oder als Kriterium für eine Selektion zu nutzen. Hauptanwendungsgebiete sind beispielsweise die Kontrolle von frittierten Kartoffelchips oder auch die Sortierung von Obst oder Gemüse. Die Produkte werden dazu mit Licht einer definierten Wellenlänge beleuchtet und das von ihnen reflektierte Licht ausgewertet. Die Lösung beschreibt eine automatische Kalibrierungsmethode, durch die der Einfluss von Schwankungen der Farbtemperatur der Lichtquelle oder statistischer Veränderungen im Messablauf kompensiert werden. Zur Kalibrierung der Anordnung wird eine Scheibe mit einem bekannten Farbmuster vor den Messkopf geschwenkt und die Intensität des reflektierten Lichtes gemessen. Das gemessene Lichtsignal wird mit einem bekannten Standardsignal verglichen, um Veränderungen feststellen zu können. Nachteilig bei dieser Lösung ist das Fehlen der erst durch die spektralen Informationen gewährleisteten Universalität. Die als Kalibrierhilfsmittel dienenden Farbmuster sind applikationsspezifisch.

In der noch nicht veröffentlichten Patentanmeldung DE 10 2004 021 448.4 wird ein spektrometrischer Reflexionsmesskopf mit interner Rekalibrierung beschrieben, bei dem im Gehäuse des Messkopfes zusätzlich mindestens zwei Standards, vorzugsweise ein Schwarz- und ein Weißstandard, zur internen Rekalibrierung vorhanden sind, die wahlweise in den Strahlengang des Reflexionsmesskopfes geschwenkt werden können. Nach der Erfassung der Messdaten beider Standards durch das Spektrometer erfolgt die Rekalibrierung des Reflexionsmesskopfes durch die Steuer- und Auswerteeinheit. Zusätzlich können zur Kalibrierung des Reflexionsmesskopfes vor der Inbetriebnahme der Messanordnung bzw. in bestimmten Zeitabständen mindestens zwei externe Standards vorhanden sind.

Der vorliegenden Erfindung liegt die Aufgabe zugrunde ein Verfahren zu schaffen, bei dem bei einer spektroskopischen Reflexionsmessung Systemänderungen durch Rekalibrierung anhand vorliegender universeller Referenzmuster selbst-tätig, in festlegbaren Zeitabschnitten kompensiert werden können, ohne dass die Messanordnung dafür verändert wird.

Erfindungsgemäß wird die Aufgabe durch die Merkmale des Anspruchs 1 gelöst. Bevorzugte Weiterbildungen und Ausgestaltungen sind Gegenstand der abhängigen Ansprüche.

Dazu besteht der spektrometrische Messkopf mit Rekalibrierung aus einem mit einem Fenster versehenen Gehäuse, in dem eine Beleuchtungsquelle, eine Spektrometeranordnung und mindestens zwei Standards zur Rekalibrierung angeordnet sind. Die beiden Standards können wahlweise so in den Strahlengang des Messkopfes geschwenkt werden, dass das gesamte von der Beleuchtungsquelle ausgehende Messlicht zur Rekalibrierung verwendet wird. Im Gehäuse sind außerdem ein Prozessor zur Erfassung und Bearbeitung der Messwerte und eine Schnittstelle zu einem Bussystem vorhanden.

Die vorgeschlagene technische Lösung kann für spezielle Messaufgaben sowohl im VIS- als auch im NIR-Bereich gewerblich angewendet werden. Während beispielsweise die Bestimmung der Farbe von kontinuierlichen Proben im VIS-Bereich erfolgt, wird der Feuchtgehalt und der Gehalt an Fett, Stärke, Eiweiß und dgl. für Proben aus der Land- und Nahrungsgüterwirtschaft im NIR-Bereich bestimmt. Für die Nutzung der verschiedenen Spektralbereiche sind die zu verwendenden Spektrometer entsprechend anzupassen. Der Messkopf kann für den gesamten Spektralbereich verwendet werden.

Die Erfindung wird nachfolgend anhand eines Ausführungsbeispieles beschrieben. Dazu zeigt:

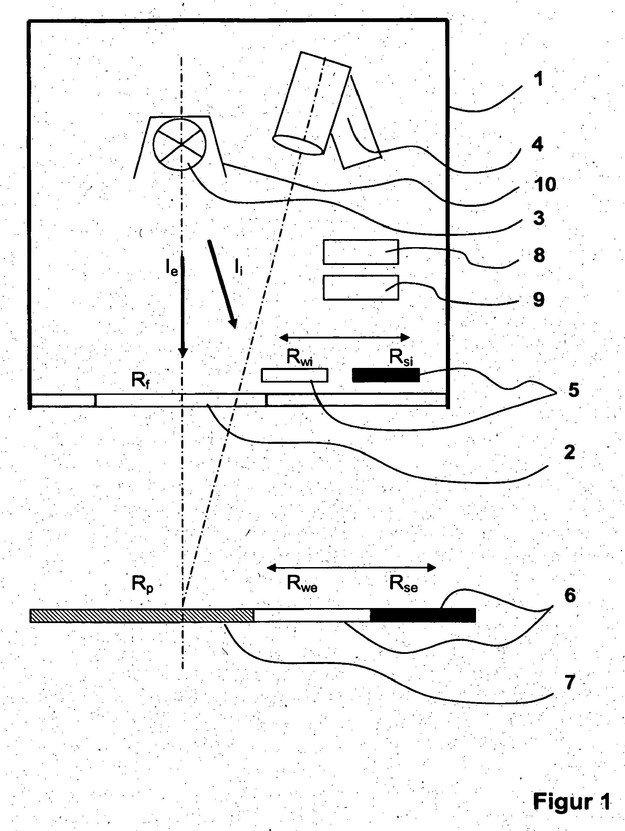

Figur 1:    den schematischen Aufbau des spektrometrischen Reflexionsmesskopfes.

**Figur 1** zeigt den spektrometrischen Messkopf mit Rekalibrierung. Dieser besteht aus einem, mit einem Fenster **2** versehenen Gehäuse **1**, in dem eine Beleuchtungsquelle **3**, eine Spektrometeranordnung **4**, und mindestens zwei Standards **5** zur Rekalibrierung angeordnet sind. Diese Standards **5** können wahlweise so in den Strahlengang des Messkopfes geschwenkt werden, dass das gesamte von der Beleuchtungsquelle **3** ausgehende Messlicht zur Rekalibrierung verwendet wird. Zusätzlich sind im Gehäuse **1** ein Prozessor **8** zur Erfassung und Bearbeitung der Messwerte und eine Schnittstelle **9** zu einem Bussystem vorhanden.

In einer anderen Ausgestaltung ist anstelle der Spektrometeranordnung **4** eine Optikbaugruppe zum Sammeln und Einkoppeln des Messlichtes in einen Lichtleiter angeordnet, über den das Messlicht zur Spektrometeranordnung **4** geleitet wird.

Um die Spektrometeranordnung an die verschiedenen Reflexionsverhalten unterschiedlichster Proben **7** anzupassen, kann die Lampenleistung der vorzugsweise über einen Refilektor **10** verfügenden Beleuchtungsquelle **3** automatisch geregelt werden. Dadurch wird gewährleistet, dass die Integrationszeit der Spektrometeranordnung **4** nahezu konstant bleibt. In Verbindung mit der Referenzierung kann somit jederzeit eine an die jeweiligen Proben- und Messbedingungen optimierte Messung erfolgen.

Die Spektrometeranordnung **4** besteht mindestens aus einem Dispersionselement und einem Detektorarray und verfügt gegebenenfalls über abbildende Optikbaugruppen. Durch die direkte Abbildung der von der Probe **7** reflektierten Strahlung auf das Detektorarray, können je nach Probe **7** Abbildungen aus der Struktur der Probe **7** auf dem Detektorarray zu Messfehlern führen. Um dies zu verhindern ist ein Lichtintegrator vorgesehen.

Die im Messkopf vorhandenen zwei Standards **5** dienen der internen Rekalibrierung der Messanordnung. Zur Kalibrierung des Messkopfes vor der Inbetriebnahme der Messanordnung bzw. in bestimmten Zeitabständen sind mindestens zwei zusätzliche externe Standards **6** vorhanden. Sowohl als interne **5** als auch als externe Standards **6** werden vorzugsweise Schwarz- und Weißstandards verwendet, die durch zusätzliche, anwendungsspezifische interne Standards für weitergehende Rekalibrierungen ergänzt werden können.

Die Standards **5** und **6** werden vorzugsweise motorisch betrieben und können automatisch und/oder manuell gesteuert werden. Die interne und externe Referenzierung ermöglicht eine automatische Systemüberwachung, eine Überwachung des Fensters **2** auf Beschädigung, Verschmutzung usw., sowie die Möglichkeit, unterschiedliches Fenstermaterial zu verwenden, ohne dass die existierenden Kalibrationen verändert oder angepasst werden müssen.

Nach Erfassung der Messdaten mit den beiden internen Standards **5** durch die Spektrometeranordnung **4** erfolgt unter Nutzung der Messwerte der Kalibrierung des Reflexionsmesskopfes vor der Inbetriebnahme, die Rekalibrierung des Messkopfes. Nachdem die internen Standards **5** aus dem Strahlengang ausgeschwenkt wurden, ist der Messkopf für die nächste Messung der Probe bereit.

Zusätzlich ist im Gehäuse **1** ein Prozessor **8** zur Erfassung und Bearbeitung der Messwerte angeordnet. Von diesem Prozessor **8** können sowohl Rohdaten, d. h. die Vorverarbeitung der Daten auf spektraler Basis, als auch berechnete Ergebnisse erzeugt werden, die dann über die vorhandene Schnittstelle **9** zu einem Bussystem übertragen werden können. Außerdem enthält der Prozessor **8** die Software für das notwendige Busmanagement. Durch den Prozessor **8** entsteht ein vollständig autark arbeitendes System. Damit der Messkopf in einem weiten Arbeitstemperaturbereich auch ohne zusätzliche Kühlung des Detektorarrays einsetzbar ist, beinhaltet der Prozessor **8** eine entsprechende Kompensationselektronik, die die sich verändernden Parameter der Spektrometeranordnung **4** bei Temperaturwechsel ausgleicht.

Die Schnittstelle **9** zu einem Bussystem dient der Datenübertragung und/oder Kalibrierung und/oder Systemdiagnose und kann dabei drahtgebunden oder auch drahtlos ausgeführt sein.

Bei dem Verfahren zur Rekalibrierung eines spektrometrischen Messkopfes, bei dem in einem mit einem Fenster **2** versehenen Gehäuse **1**, eine Beleuchtungsquelle **3**, eine Spektrometeranordnung **4** und mindestens zwei Standards **5** zur Rekalibrierung angeordnet sind, werden diese Standards **5** wahlweise so in den Strahlengang des Messkopfes geschwenkt, dass das gesamte von der Beleuchtungsquelle **3** ausgehende Messlicht zur Rekalibrierung verwendet wird. Von einem Prozessor **8** werden die Messwerte erfasst und bearbeitet und diese über eine Schnittstelle **9** zu einem Bussystem übertragen.

Bei dem spektrometrischen Messkopf wird die zu messende Probe **7** mit einer Beleuchtungsquelle **3** bestrahlt. Die von der Probe **7** reflektierte Strahlung wird direkt von einer Spektrometeranordnung **4** aufgenommen. Anhand der Intensitätsverteilung der reflektierten Strahlung können, basierend auf Kalibrierungen, unterschiedliche Inhaltsstoffe bestimmt werden. Mit dem beschriebenen Messkopf sind sowohl statische Messungen als auch Messungen eines Materialstroms möglich.

Die für die verschiedenen internen **5** und externen Standards **6** erforderlichen gemessenen Intensitätswerte werden gespeichert und für die Rekalibrierung benutzt. Die erforderlichen Intensitätswerte sind hierbei:

externer Weißstandard
$$I_{we} = I_e \cdot \left( R_f + R_{we} \cdot [1 - R_f]^2 \right) + I_d$$

externer Schwarzstandard
$$I_{se} = I_e \cdot \left( R_f + R_{se} \cdot [1 - R_f]^2 \right) + I_d$$

interner Weißstandard
$$I_{wi} = I_i \cdot R_{wi} + I_d$$

interner Schwarzstandard
$$I_{si} = I_i \cdot R_{si} + I_d$$

und der Probe
$$I_p = I_e \cdot \left( R_f + R_p \cdot [1 - R_f]^2 \right) + I_d$$

wobei

$I_e$ der Messintensität am externen Messort

$I_i$ der Messintensität am internen Messort

$I_d$ der Messintensität des Dunkelsignals

$R_f$ dem Reflexionsgrad des Messkopffensters

$R_{we}$ dem Reflexionsgrad des externen Weißstandards

$R_{se}$ dem Reflexionsgrad des externen Schwarzstandards

$R_{wi}$ dem Reflexionsgrad des internen Weißstandards

$R_{si}$ dem Reflexionsgrad des internen Schwarzstandards

$R_p$ dem Reflexionsgrad der Messprobe entspricht.

Durch Bildung der Differenzen $D_1$ bis $D_4$ wird die Änderung des Dunkelsignals $I_d$ mit jeder internen Rekalibrierung aktuell kompensiert.

$$D_1 = I_{we} - I_{se} = I_e \cdot [1 - R_f]^2 \cdot \left( R_{we} - R_{se} \right)$$

$$D_2 = I_{wi} - I_{si} = I_i \cdot \left(R_{wi} - R_{si}\right)$$

$$D_3 = I_{se} - I_{si} = I_e \cdot \left(R_f + R_{se} \cdot [1 - R_f]^2\right) - I_i \cdot R_{si}$$

$$D_4 = I_p - I_{si} = I_e \cdot \left(R_f + R_p \cdot [1 - R_f]^2\right) - I_i \cdot R_{si}$$

Die Quotientenbildung

$$q(t) = D_2 / D_2(t) = I_e / I_e(t) = I_i / I_i(t)$$

beschreibt die relative zeitliche Änderung der Empfindlichkeit und der Messintensität zu den Zeitpunkten der Messung von $D_2$ (am Beginn) und $D_2(t)$ (nach Rekalibrierung). Das Gesamtdesign des Messkopfes stellt sicher, dass $q(t)$ am internen und externen Messort gleich ist.

Aus diesen Werten lässt sich der Reflexionsgrad $R_p'$ (am Beginn) bzw. der korrigierte Reflexionsgrad $R_p'(t)$ (nach Rekalibrierung) der Messprobe berechnen.

$$R_p' = \frac{D_4 - D_3}{D_1} = \frac{R_p - R_{se}}{R_{we} - R_{se}} \qquad R_p'(t) = \frac{D_4(t) * q(t) - D_3}{D_1} = \frac{R_p - R_{se}}{R_{we} - R_{se}}$$

Dabei ist das Ergebnis $R_p'(t)$ nicht von den zeitlichen Änderungen des Dunkelsignals, der Lampenintensität und der Empfängerempfindlichkeit betroffen.

Nachdem die internen Standards **5** aus dem Strahlengang ausgeschwenkt wurden, ist der Messkopf für die nächste Messung der Probe **7** bereit.

Die internen Standards **5** können dabei beispielsweise auf einem Filterrad oder einem Schiebemechanismus angeordnet sein. Für anwendungsspezifische Rekalibrierungen können dabei, neben dem Schwarz- und dem Weißstandard, zusätzliche interne Standards vorhanden sein.

Obwohl am internen Messort andere Messintensitäten der Beleuchtungsquelle **3** als am externen Probenmessort bestehen, wird durch die geometrische Anordnung der internen Standards **5** sichergestellt, dass sich spektrale Intensitätsänderungen an beiden Messorten mit gleicher Proportionalität vollziehen. Änderung der Empfindlichkeit und des Dunkelsignals der Spektrometeranordnung **4** sind unabhängig vom Messort und damit intern und extern gleichermaßen wirksam. Dadurch kann mit der in festgelegten Zeitabschnitten ausgerührten Rekalibrierung eine durch die genannten Einflüsse verursachte Messwertänderung im Langzeitbetrieb vermieden werden.

Bei der erfindungsgemäßen Lösung erfolgt die interne Rekalibrierung in kurzen Zeitabständen automatisch nach einem vorher festgelegten Zeitrhythmus oder nach Bedarf.

Sowohl der Messkopf als auch das Messobjekt verbleiben während der Kalibrierung und auch Rekalibrierung in der normalen Messposition.

Bei der erfindungsgemäßen Lösung ist die relativ zeitaufwendige Kalibrierung des Messkopfes am Einsatzort nur vor der Inbetriebnahme bzw. in größeren Zeitabständen erforderlich. Durch die in festgelegten Zeitabschnitten durchzuführenden internen Rekalibrierungen ist es möglich, Messwertänderungen im Langzeitbetrieb, die beispielsweise durch Änderung der Empfindlichkeit und des Dunkelsignals des Detektionssystems oder schwankende Lichtintensität der Beleuchtungsquelle verursacht werden können, zu vermeiden.

**Patentansprüche**

1. Verfahren zur Rekalibrierung eines spektrometrischen Messkopfes, bei dem in einem, mit einem Fenster (2) versehenen Gehäuse (1), eine Beleuchtungsquelle (3), eine Spektrometeranordnung (4) und mindestens zwei interne Standards (5) zur Rekalibrierung angeordnet sind, wobei von einem Prozessor (8) Messwerte erfasst und bearbeitet und über eine Schnittstelle (9) zu einem Bussystem übertragen werden, wobei diese internen Standards zur Rekalibrierung wahlweise so in den Strahlengang des Messkopfes geschwenkt werden, dass das von der Beleuchtungsquelle (3) ausgehende Messlicht zur Rekalibrierung verwendet wird, Messdaten der internen Standards durch die Spektrometeranordnung (4) erfasst werden und die Rekalibrierung unter Nutzung der Messdaten der interen Standards und gespeicherter Messwerte für mindestens zwei zusätzliche externe Standards (6) erfolgt.

2. Verfahren zur Rekalibrierung nach Anspruch 1, bei dem zur Kalibrierung des Messkopfes vor der Inbetriebnahme der Messanordnung bzw. in bestimmten Zeitabständen mindestens zwei zusätzliche externe Standards (6) wahlweise in den Strahlengang des Messkopfes geschwenkt werden.

3. Verfahren zur Rekalibrierung nach Anspruch 1 oder 2, bei dem die Rekalibrierung mit Hilfe interner (5) und/oder externer Standards (6), vorzugsweise Schwarz- und Weißstandards, automatisch nach einem vorher festgelegten Zeitrhythmus oder nach Bedarf erfolgt.

4. Verfahren zur Rekalibrierung nach einem der Ansprüche 1 bis 3, bei dem die Schnittstelle (9) zur Datenübertragung und/oder Kalibrierung und/oder Systemdiagnose an ein Bussystem vorgesehen ist.

5. Verfahren zur Rekalibrierung nach einem der Ansprüche 1 bis 4, bei dem im Gehäuse (1) statt der Spektrometeranordnung (4) eine Optikbaugruppe zum Sammeln und Einkoppeln des Messlichtes in einen Lichtleiter angeordnet ist, das Messlicht über diesen Lichtleiter zu der außerhalb des Messkopfes angeordneten Spektrometeranordnung (4) geleitet wird und das Gehäuse (1) Verbindungen zu einer Spannungsquelle, einer Steuer- und Auswerteeinheit sowie der Spektrometeranordnung (4) aufweist, wobei im Gehäuse (1) zusätzlich mindestens zwei Standards (5) vorhanden sind, die zur internen Rekalibrierung wahlweise in den Strahlengang geschwenkt werden, nach Erfassung der Messdaten beider Standards (5) durch die Spektrometeranordnung (4) die Rekalibrierung durch die Steuer- und Auswerteeinheit erfolgt und die Standards (5) aus dem Strahlengang ausgeblendet werden, so dass der Messkopf für die nächsten Messungen der Probe (7) bereit ist.

6. Verfahren zur internen Rekalibrierung nach einem der Ansprüche 1 bis 5, bei dem zusätzliche, anwendungsspezifische interne Standards für weitergehende Rekalibrierungen in den Strahlengang geschwenkt werden.

**Claims**

1. Method for recalibration of a spectrometric measuring head, in which an illumination source (3), a spectrometer arrangement (4) and at least two internal standards (5) for recalibration purposes are arranged in a housing (1) provided with a window (2), with measurement values being detected and processed by a processor (8) and being transmitted via an interface (9) to a bus system, with these internal standards for recalibration selectively being pivoted into the beam path of the measuring head in such a way that the measurement light emanating from the illumination source (3) is used for the recalibration, measurement data from the internal standards are detected by the spectrometer arrangement (4) and the recalibration is performed using the measurement data from the internal standards and stored measurement values for at least two additional external standards (6).

2. Method for recalibration according to Claim 1, in which at least two additional external standards (6) are selectively pivoted into the beam path of the measuring head for calibrating the measuring head prior to putting the measurement arrangement into operation and/or after specific time intervals.

3. Method for recalibration according to Claim 1 or 2, in which the recalibration is performed automatically with the aid of internal (5) and/or external standards (6), preferably black and white standards, according to a preset temporal rhythm or when necessary.

4. Method for recalibration according to one of Claims 1 to 3, in which the interface (9) to a bus system is provided for data transmission and/or calibration and/or system diagnostics.

5. Method for recalibration according to one of Claims 1 to 4, in which an optical assembly is arranged in the housing (1) instead of the spectrometer arrangement (4) for the purposes of collecting and coupling the measurement light into an optical waveguide, the measurement light is guided by way of this optical waveguide to the spectrometer arrangement (4) arranged outside of the measuring head and the housing (1) has connections to a voltage source, a control and evaluation unit and the spectrometer arrangement (4), wherein at least two standards (5) are additionally present in the housing (1), which standards are selectively pivoted into the beam path for the purposes of internal recalibration, the recalibration is carried out by the control and evaluation unit after detecting the measurement data from both standards (5) by the spectrometer arrangement (4) and the standards (5) are blocked out of the beam path such that the measuring head is available for the next measurements of the sample (7).

**6.** Method for internal recalibration according to one of Claims 1 to 5, in which additional, application-specific internal standards are pivoted into the beam path for further recalibrations.

## Revendications

**1.** Procédé de réétalonnage d'une tête de mesure spectrométrique, dans lequel une source d'éclairement (3), un système de spectromètre (4) et au moins deux étalons internes (5) sont disposés dans un boîtier (1) muni d'une fenêtre (2) à des fins de réétalonnage, dans lequel des valeurs de mesure sont détectées et traitées par un processeur (8) et sont transmises à un système de bus par l'intermédiaire d'une interface (9), dans lequel lesdits étalons internes sont amenés à pivoter sélectivement dans le chemin de faisceau de la tête de mesure à des fins de réétalonnage de manière à ce que la lumière de mesure émanant de la source d'éclairement (3) soit utilisée à des fins de réétalonnage, en ce que des données de mesure des étalons internes sont détectées par le système de spectromètre (4) et en ce que le réétalonnage est effectué par utilisation des données de mesure des étalons internes et de valeurs de mesure stockées pour au moins deux étalons externes supplémentaires (6).

**2.** Procédé de réétalonnage selon la revendication 1, dans lequel au moins deux étalons externes supplémentaires (6) sont amenés à pivoter sélectivement dans le chemin de faisceau de la tête de mesure pour étalonner la tête de mesure avant la mise en fonctionnement du système de mesure ou à des intervalles de temps déterminés.

**3.** Procéder de réétalonnage selon la revendication 1 ou 2, dans lequel le réétalonnage est effectué automatiquement à l'aide d'étalons internes (5) et/ou externes (6), de préférence des étalons noirs et blancs, selon un rythme temporel préalablement établi ou selon les besoins.

**4.** Procédé de réétalonnage selon l'une quelconque des revendications 1 à 3, dans lequel l'interface (9) est munie d'un système de bus pour la transmission de données et/ou l'étalonnage et/ou les diagnostics du système.

**5.** Procédé de réétalonnage selon l'une quelconque des revendications 1 à 4, dans lequel un module optique est disposé dans le boîtier (1) au lieu du système de spectromètre (4) pour collecter et injecter la lumière de mesure dans un guide optique, la lumière de mesure est guidée par l'intermédiaire dudit guide de lumière vers le système de spectromètre (4) disposé à l'extérieur de la tête de mesure et le boîtier (1) comprend des connexions à une source de tension, à une unité de commande et d'évaluation et au système de spectromètre (4), dans lequel au moins deux étalons (5) sont en outre présents dans le boîtier (1), lesquels étalons sont amenés à pivoter sélectivement dans le chemin de faisceau à des fins de réétalonnage interne après détection des données de mesure des deux étalons (5) par le système de spectromètre (4), le réétalonnage est effectué par l'unité de commande et d'évaluation et les étalons (5) sont sortis du chemin de faisceau de manière à ce que la tête de mesure soit prête à effectuer les mesures suivantes de l'échantillon (7).

**6.** Procédé de réétalonnage interne selon l'une quelconque des revendications 1 à 5, dans lequel des étalons internes supplémentaires spécifiques des applications et destinés à effectuer des réétalonnages plus approfondis sont amenés à pivoter dans le chemin de faisceau.

$I_e$  $I_i$

$R_{wi}$  $R_{si}$

$R_f$

$R_p$  $R_{we}$  $R_{se}$

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5982501 A
- WO 0004373 A1
- EP 0296259 A1
- EP 0010940 A1
- DE 102004021448